# EUROPÄISCHE PATENTSCHRIFT

(11) **EP 0 732 164 B1**
(45) Veröffentlichungstag und Bekanntmachung des Hinweises auf die Patenterteilung: **25.08.1999**
(21) Anmeldenummer: 96103615.9
(22) Anmeldetag: 08.03.1996
(51) Int. Cl.: B23B 51/04, E21B 10/40, B25D 17/08

(54) **Bohrwerkzeug insbesondere für drehschlagendes Bohren von vorzugsweise Gestein**
Drilling tool, particularly for percusive drilling of stone
Outil de perçage, en particulier pour le perçage par percussion de la pierre

(30) Priorität: 17.03.1995 DE 19509213; 03.11.1995 DE 19541009
(43) Veröffentlichungstag der Anmeldung: 18.09.1996
(73) Patentinhaber: Hawera Probst GmbH, 88212 Ravensburg (DE)
(72) Erfinder: Meyen, Hans-Peter, 88284 Wolpertswende (DE); Moser, Bernhard, 88361 Altshausen (DE)
(74) Vertreter: Patentanwälte Eisele, Otten, Roth & Dobler

(56) Entgegenhaltungen:
- EP-A- 0 474 591
- DE-A- 3 322 887
- DE-A- 4 032 064
- DE-U- 1 992 344
- DE-U- 8 910 822
- GB-A- 2 173 431
- US-A- 4 202 557

## Beschreibung

Die Erfindung betrifft ein Bohrwerkzeug insbesondere für drehschlagendes Bohren von vorzugsweise Gestein nach dem Oberbegriff des Anspruchs 1 und wie z.B. aus DE-U-8521577.5 bekannt.

### Stand der Technik:

Bohrwerkzeuge und insbesondere Gesteinsbohrer werden zur Herstellung von Durchbrüchen in Beton oder Mauerwerk verwendet und sind insbesondere auch für den Einsatz in Bohrhämmern konzipiert. Zur Herstellung größerer Durchbrüche werden im allgemeinen sogenannte Bohrkronen verwendet, wie sie beispielsweise in der DE 33 22 887 dargestellt sind. Eine solche Bohrkrone besteht aus einem topfförmigen Gehäuse mit stirnseitig angeordneten Hartmetall-Schneideinsätzen. Ein konzentrisch eingesetzter Zentrierbohrer dient der Zentrierung insbesondere beim Anbohren des Gesteinsmaterials.

Zur Herstellung von im allgemeinen kleineren Durchbrüchen sind weiterhin sogenannte Durchbruchbohrer bekannt geworden, die im allgemeinen aus einem massiven Bohrerkopf bestehen, wobei der Bohrerschaft mit einer einstückigen oder separaten Förderwendel versehen ist (DE 28 56 205 A1; DE 36 14 010 A1). Auch der Gesteinsbohrer gemäß DE 28 56 205 weist einen topfförmigen Kreuzbohrkopf auf, mit einem separat einsetzbaren Zentrierbohrer.

Sowohl bei Bohrkronen als auch bei Durchbruchbohrern mit auswechselbaren Zentrierbohrern besteht das Problem, den Zentrierbohrer haltbar, jedoch auch auswechselbar in einer Bohrung im Bohrwerkzeug zu platzieren. Hierfür ist diese Bohrung zur Aufnahme des Zentrierbohrers im allgemeinen konusförmig ausgestaltet, um einen ebenfalls konusförmigen Zentrierbohrerschaft aufzunehmen. Der Austausch nach längerem Betrieb des Bohrwerkzeugs kann sich jedoch als problematisch herausstellen, da die Klemmwirkung der konusförmigen Flächen derart groß ist, daß der Zentrierbohrer nicht ohne weiteres entfernt werden kann. Hierfür sieht die DE 33 22 887 beispielsweise eine Querbohrung vor, in welcher das Ende des Zentrierbohrers hineinragt. Mittels eines separaten Werkzeugs kann dann der Zentrierbohrer herausgepreßt werden. Eine solche querverlaufende Ausnehmung am Ende des konusförmigen Sitzes im Bohrkronenschaft stellt jedoch ein Querschnittsstörung dar, die die Übertragung von Schlagbewegungen beeinträchtigt. Außerdem wird der Querschnitt des Werkzeugschaftes nachteilig geschwächt.

Die DE 33 22 887 weist weiterhin ein als separater Ring ausgebildetes Sicherungselement am Zentrierbohrer auf, welches ein Herausfallen während des Betriebes vermeiden soll. Diese Einrichtung dient jedoch lediglich dazu, ein unbeabsichtigtes Herausfallen des Zentrierbohrers zu verhindern. Im Normalfall sitzt der Zentrierbohrer aufgrund der konischen Reibschlußverbindung fest in der Bohrkrone.

Eine weiterhin bekannte Lösung gemaß dem deutschen Gebrauchsmuster GM 1 992 344 sieht vor, daß der Zentrierbohrer einer Bohrkrone innerhalb des Bohrkronenschaftes mittels einer bajonettartigen Verbindung axial unverschiebbar befestigt ist. Hierfür weist der Zentrierbohrer am hinteren Ende seines Einspannschafts eine Abflachung auf, die mit einem außermittig in einer Querbohrung sich befindenden Bolzen zusammenwirkt. Eine zusätzliche, zur Abflachung etwa senkrecht stehende Nut wird durch eine Drehung des Bohrers mit dem querliegenden Bolzen bajonettverschlußartig in Verbindung gebracht. Hierdurch ist der Zentrierbohrerschaft gegen Herausfallen axial unverschiebbar gesichert.

Zum allgemeinen Stand der Technik gehört es auch, den Zentrierbohrer in einer Bohrkrone mittels einer querliegenden Schraube zu fixieren. Dabei ist der Zentrierbohrer im Bereich der eindringenden Schraube in Bohrerlängsrichtung ausgespart, um gegebenenfalls auch eine axiale Bewegung des Bohrers durchführen zu können.

Auch der Gegenstand des Gebrauchsmusters DE-U1-85 21 577 zeigt eine Bohrkrone, mit einem axial beweglichen Zentrierbohrer, wobei seitlich angeordnete Gewindestifte in die Aufnahmebohrung für den Zentrierbohrer hineinragen. Dabei ist der Zentrierbohrer als bekannter "SDS-Bohrer" ausgebildet, der Längsnuten für eine separate Drehmitnahme sowie eine axiale Sicherung mit jeweils getrennten Elementen aufweist. Ein solches Werkzeug ermöglicht zwar einen kostengünstigen Einsatz eines bekannten SDS-Bohrers. Der mechanische Aufwand am Schaft der Bohrkrone ist jedoch beträchtlich.

Der Nachteil der bekannten Lösungen mit einem axial beweglichen Zentrierbohrer besteht auch darin, daß während des drehschlagenden Bohrens der Zentrierbohrer gegenüber dem übrigen Werkzeug Längs- und Drehschwingbewegungen durchführt, die bei starker Beanspruchung zu einer Zerstörung der Haltemittel für den Zentrierbohrer führen. Insbesonder wird beispielsweise das Gewinde eines querliegenden Haltestiftes durch diese Schwingungen relativ schnell zerstört. Auch die Vielzahl der verwendeten Einzelteile gemäß dem Gebrauchsmuster GM 85 21 577 sind bei einer schlagenden Beanspruchung mit einem axial verschiebbaren Zentrierbohrer einem hohen Verschleiß ausgesetzt.

Die feste Anbringung des Zentrierbohrers beispielsweise mittels eines konusförmigen Sitzes weist darüberhinaus den Nachteil auf, daß die Bohrleistung deutlich herabgesetzt ist, gegenüber einer Ausführungsform, bei welcher den Zentrierbohrer selbst durch eine schlagende Beanspruchung in axiale Schwingbewegung versetzbar ist.

### Aufgabe und Vorteile der Erfindung:

Der Erfindung liegt die Aufgabe zugrunde, die Nachteile des zuvor erläuterten Standes der Technik zu vermeiden und insbesondere eine Halterung für einen Zentrierbohrer in einem Bohrwerkzeug zu schaffen, welche insbesondere für einen drehschlagenden Einsatz bestimmt ist und hohe Standzeiten, eine leichte Austauschbarkeit des Zentrierbohrers und eine verbesserte Bohrleistung aufweist.

Diese Aufgabe wird ausgehend von einem Bohrwerkzeug nach dem Oberbegriff des Anspruchs 1 durch die kennzeichnenden Merkmale des Anspruchs 1 gelöst. In den Unteransprüchen sind vorteilhaft und zweckmäßige Weiterbildungen des erfindungsgemäßen Werkzeugs angegeben.

Der Erfindung liegt der Kerngedanke zugrunde, daß ein Bohrwerkzeug für insbesondere drehschlagendes Bohren von Gestein in vorteilhafter Weise mit einem austauschbaren Zentrierbohrer zu versehen ist, der als Verschleißteil konzipiert ist. Dabei soll der Zentrierbohrer selbst innerhalb seiner Aufnahmebohrung axial bewegbar gelagert sein, um schlagend beansprucht zu werden, wobei erfindungsgemäß der Zentrierbohrer über ein stab- oder rohrförmiges Halteelement am Herausfallen gesichert ist. Hierfür befindet sich im Bohrwerkzeug eine quer zur axialen Bohrrichtung angeordnete Ausnehmung oder Bohrung, in die das Haltemittel bezüglich der Längsachse des Bohrwerkzeugs außermittig eindringt und mit einer seitlichen Aussparung oder Abflachung am Zentrierbohrerschaft derart zusammenwirkt, daß der Zentrierbohrer trotz axialer Bewegbarkeit am Herausfallen gehindert und gleichzeitig eine Drehmitnahme vorgesehen ist. Dies stellt eine besonders einfache und kostengünstige Lösung dar, da das stab- oder rohrförmige Haltemittel gleichzeitig als Drehmitnahme und axiale Sicherung des Zentrierbohrers dient. Zum Austausch des stiftförmigen Haltemittels kann dieses leicht aus der Querbohrung entfernt werden. Das stiftartige Haltemittel beispielsweise im Bohrkronenschaft oder im Bohrerkopf eines Durchbruchbohrers dringt demzufolge in die Aufnahmebohrung des Zentrierbohrers außermittig und nahezu tangential zum Zentrierbohrer ein. Aufgrund der dortigen Aussparung des Zentrierbohrerschaftes in diesem Bereich kann der Zentrierbohrer longitudinale Schwingbewegungen in axialer Richtung ausführen, wobei die Bohrung zur Aufnahme des Zentrierbohrers vorzugsweise derart ausgestaltet ist, daß der Bohrungsboden gleichzeitig als Anschlage für das Zentrierbohrerende dient, um die axialen Schläge des Bohrwerkzeugs auf den Zentrierbohrer zu übertragen. Durch die axiale Bewegbarkeit des Zentrierbohrers kann dieser gegenüber dem übrigen Bohrwerkzeug Schwingbewegungen durchführen. Damit wird eine Reduzierung der Bohrleistung, wie sie beispielsweise bei einer Ausführungsform mit feststehenden Zentrierbohrer der Fall ist, vermieden. Der Zentrierbohrer unterliegt einschließlich seinen Haltemitteln in diesem Bereich nahezu keinem Verschleiß. Weiterhin ist der Austausch von Halterung und/oder Zentrierbohrer leicht möglich. Aufgrund der außermittigen Halterung am Zentrierbohrer wird sichergestellt, daß eine zuverlässige Drehmitnahme des Zentrierbohrers gewährtleistet ist.

Eine solche Anordnung kann problemlos sowohl bei einer Bohrkrone als beispielsweise auch bei bekannten Durchbruchbohrern verwendet werden, um austauschbare Zentrierbohrer verwenden zu können.

Besonders vorteilhaft ist es weiterhin, wenn die Ausnehmung zur Aufnahme des Haltemittels das Bohrwerkzeug vollständig in Querrichtung durchdringt. Auf diese Weise kann das stab- oder rohrförmige Haltemittel in einfacher Weise entfernt werden. Dabei sieht die Erfindung Haltemittel vor, die lose innerhalb der Querbohrung angeordnet sind. Ein Herausfallen wird in diesem Fall durch zusätzliche Überstülpmaßnahmen getroffen, die ein seitliches Austreten des Haltemittels verhindern. Das Haltemittel selbst kann jedoch auch kraftschlüssig innerhalb der querliegenden Ausnehmung oder Bohrung angeordnet sein, wobei sich vorzugsweise sogenannte Spannstifte als kostengünstig erweisen. Diese lassen sich einfach seitlich herausschlagen.

### Zeichnungen:

In den Zeichnungen sind verschiedene Ausführungsbeispiele der Erfindung dargestellt. Diese sind in der nachfolgenden Beschreibung unter Angabe weiterer Einzelheiten und Vorteile der Erfindung näher erläutert.

Es zeigen
- Fig. 1a-c: ein erstes Auführungsbeispiel eines als Bohrkrone ausgebildeten Bohrwerkzeugs mit einem lose bewegbaren Haltemittel und einem Verriegelungsring in Seitenansicht, in Schnittdarstellung entlang der Schnittlinie I-I sowie in Einzeldarstellung des Zentrierbohrers,
- Fig. 2a,b: ein zu Fig. 1 alternatives Ausführungsbeispiel mit einer Sicherung des Haltemittels über ein Federelement in zwei Seitenansichten,
- Fig. 3-6: vier weitere Ausführungsbeispiele zur Darstellung von verschiedenen Sicherungen des Halteelements in der Querbohrung,
- Fig. 7a,b: ein weiteres Ausführungsbeispiel einer erfindungsgemäßen Zentrierbohrerhalterung an einer Bohrkrone mit einer elastischen Manschette zur Sicherung des Halteelements in Seitenansicht sowie in geschnittener Draufsicht entlang der Schnittlinie A-A,
- Fig. 8: ein alternatives Ausführungsbeispiel zur Verwendung eines Haltemittels mit kraftschlüssiger Anordnung innerhalb der Querbohrung,
- Fig. 9a-c: verschiedene Ausführungsformen von stab- oder rohrförmigen Haltemitteln zur Verwendung in einem oder mehreren der vorher gezeigten Ausführungsbeispiele und
- Fig. 10: ein weiteres Ausführungsbeispiel für ein erfindungsgemäßes Bohrwerkzeug, welches als Durchbruchbohrer beispielsweise mit Kreuzbohrkopf ausgebildet ist.

### Beschreibung der Ausführungsbeispiele:

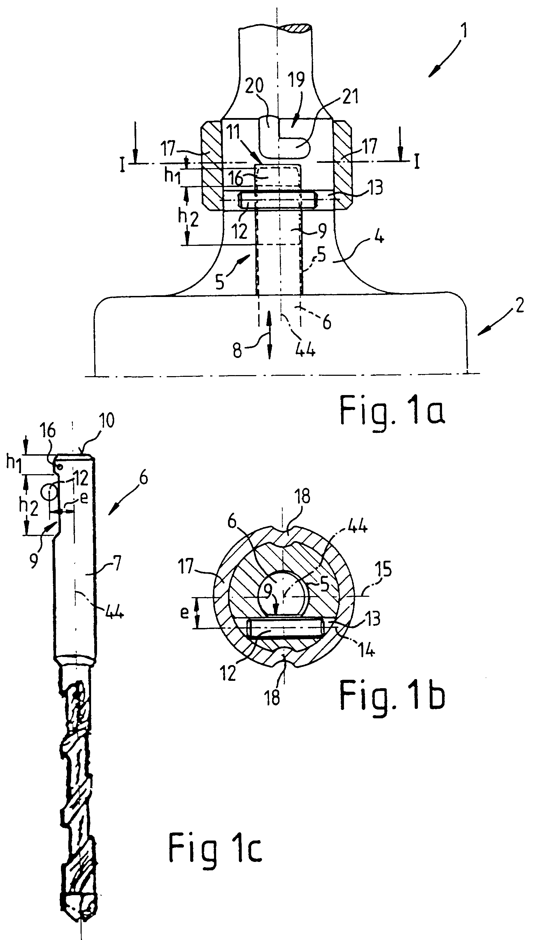

Die vorliegende Erfindung läßt sich grundsätzlich an verschiedenen Bohrwerkzeugen verwirklichen, wie dies beispielsweise in den Figuren 1, 2, 7 und 10 dargestellt ist. Insbesondere kann die erfindungsgemäße Halterung eines Zentrierbohrers in einer Bohrkrone oder auch einem Durchbruchbohrer mit einem Kreuzschneidkopf oder dergleichen erfolgen.

In der Fig. 1a bis 1c ist ein erstes Ausführungsbeispiel für ein Bohrwerkzeug 1 dargestellt, welches eine Bohrkrone 2 umfaßt, die mit einem Schaftteil 4 einstückig verbunden ist. Der prinzipielle Aufbau einer solchen Bohrkrone ist in der DE 33 22 887 beschrieben. Hierauf wird Bezug genommen.

Das Schaftteil 4 weist eine zentrische Bohrung 5 auf, welches zur Aufnahme eines Zentrierbohres 6 dient. Die zylindrische Bohrung 5 im Schaftteil 4 und das zylindrische Schaftteil 7 des Zentrierbohrers 6 sind so aufeinander abgestimmt, daß sich der Zentrierbohrer 6 axial bewegen kann, was durch den Pfeil 8 gekennzeichnet ist. Die axiale Bewegbarkeit des Zentrierbohrers 6 wird durch eine seitliche ebene Aussparung 9 oder Abflachung 9 erreicht, die sich in einem geringem Abstand h1 hinter der Anschlagsfläche 10 des Zentrierbohrers 6 befindet und sich über einen Höhenabschnitt h2 erstreckt.

Der Zentrierbohrer 6 ragt in der Bohrung 5 mit seiner Anschlagfläche 10 bis zum Boden 11 der Bohrung 5 und wird von hier aus einer schlagenden Beanspruchung unterworfen.

Damit der Zentrierbohrer 6 aufgrund seiner axialen Beweglichkeit nicht aus der Bohrung 5 des Bohrwerkzeugs 1 herausfällt, wird dieser durch ein stab- oder rohrförmiges Haltemittel 12 gehalten, welches beispielsweise auch als zylindrischer Stift 12 ausgebildet ist und sich in einer Querbohrung 13 im Schaftteil 4 des Bohrwerkzeugs 1 befindet. Wie aus Fig. 1b als Schnitt I-I von Fig. 1a ersichtlich, ist die Querbohrung 13 mit ihrer Bohrungslängsachse 14 um einen Betrag e exentrisch gegenüber der querliegenden Symmetrieachse 15 des Schaftteils 4 oder der Bohrerlängsachse 44 angeordnet. Die Exzentrizität e ist so groß bemessen, daß das querliegende Haltemittel 12 tangential an der ebenen Aussparung 9 des Zentrierbohrers 6 anliegt und damit über diesen Flächenabschnitt eine Drehmitnahme bewirkt. Ein Herausfallen des Zentrierbohrers 6 wird durch den endseitigen Zylinderabschnitt 16 mit der Höhe h1 bewirkt, d.h. der Zentrierbohrer 6 kann sich innerhalb der Bohrung 5 des Bohrwerkzeugs 1 axial bewegen, ohne daß er aus der Bohrung herausfällt.

Das vorgenannte Grundprinzip wird bei allen in der vorliegenden Erfindung beschriebenen Ausführungsbeispielen beibehalten. Unterschiedlich ausgestaltet ist die Bauform des stab- oder rohrartigen Haltemittel 12, welches in den Figuren 1a, b beispielsweise auch als Zylinderstift ausgebildet ist.

Das stiftförmige Haltemittel 12 nach Fig. 1a, b ist in der Querbohrung 13 mit Spiel gelagert, so daß ein seitliches Herausfallen durch den Verriegelungsring 17 verhindert wird. Der Verriegelungsring 17 überdeckt die Querbohrung 13 und ist auf das zylindrische Schaftteil 4 aufgeschoben. Zur Arretierung des Verriegelungsrings 17 weist dieses eine Sicke 18 auf, die mit einer abgewinkelten Nut 19 bajonettartig zusammenwirkt. Hierzu wird die Sicke 18 zunächst über einen vertikalen Nutteil 20 nach unten und dann in einen horizontalen Nutteil 21 eingedreht. Die Nuttiefe des horizontalen Nutenteils 21 kann in Richtung Nutende abnehmen, wodurch sich die Sicke 18 verklemmt.

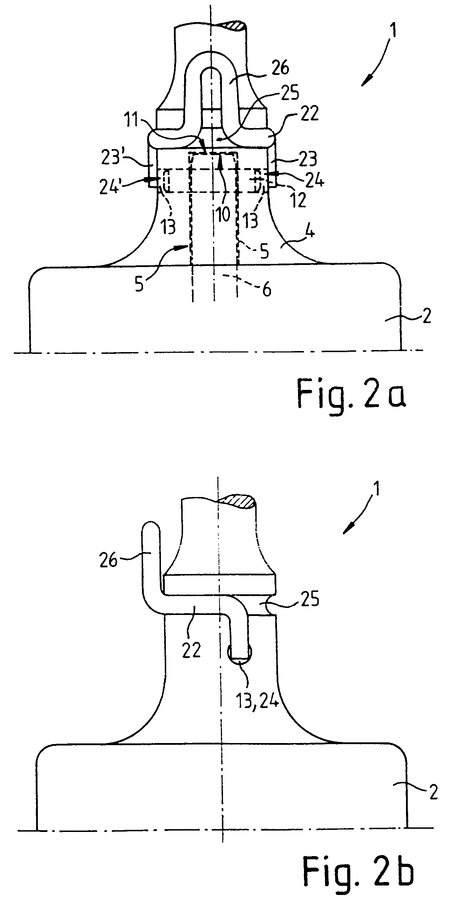

In den Figuren 2a, b ist ein weiteres Ausführungsbeispiel eines Bohrwerkzeugs mit Bohrkrone 2 gezeigt. Gleiche Teile sind mit gleichen Bezugszeichen wie zu Fig. 1a bzeichnet.

Der Zentrierbohrer 6 wird wiederum durch ein stab- und rohrförmiges Haltemittel 12 im Schaftteil 4 positioniert und gesichert, wobei zur Sicherung des zylinderförmigen Halteelements 12 in der Querbohrung 13 ein Federelement 22 eingesetzt wird. Das Federelement 22 verschließt mit seinen beiden abgewinkelten Enden 23, 23' die beiden seitlichen Öffnungen 24, 24' der Querbohrung 13 im Bohrkronenschaft 4. Somit kann das in der Querbohrung 13 beweglich angeordnete Haltemittel 12 während des Einsatzes des Bohrwerkzeuges nicht herausfallen. Um einen sicheren Sitz des Federelements 22 zu gewährleisten, wird dieses in einer Nut 25 geführt. Zusätzlich erstreckt sich das Federelement 22 etwas mehr als den halben Umfang des Schaftteils 4 an dieser Stelle, wodurch das Federelement 22 aufklipsbar ist. Um den Zentrierbohrer 6 zu wechseln, wird das Federelement 22 mit Hilfe einer nach oben umgebogenen Lasche 26 abgezogen, das zylindrische Halteelement 12 entnommen und der Zentrierbohrer 6 aus der Bohrung 5 herausgezogen. Hierzu ist keinerlei Werkzeug erforderlich.

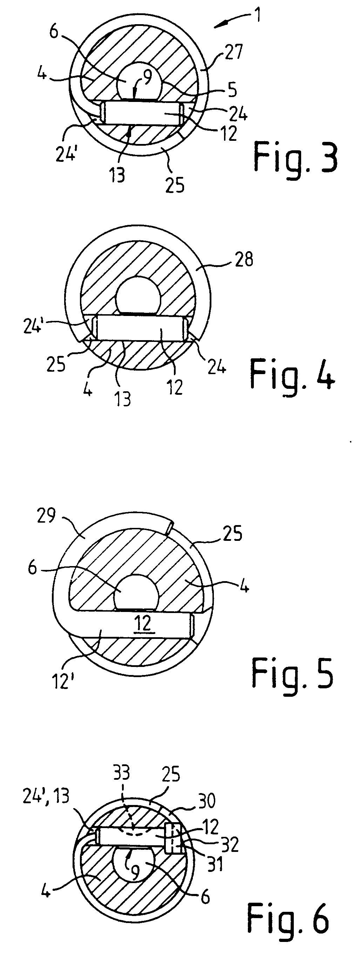

In den weiteren Figuren 3 bis 6 sind vier verschiedene Ausführungsbeispiele mit einer erfindungsgemäßen Zentrierbohrerhalterung in geschnittener Draufsicht dargestellt, wie dies prinzipiell Fig. 1b entspricht. Gleiche Teile sind gegebenenfalls mit gleichen Bezugszeichen versehen.

In allen Ausführungsbeispielen nach Fig. 3 bis 6 wird zur Sicherung und Positionierung des stab- oder rohrförmigen Haltemittels 12 ein Federelement verwendet. Die verschiedenen Federelemente sind mit Bezugszeichen 27 bis 30 bezeichnet. In allen vier Ausführungsbeispielen wird das jeweilige Federelement 27 bis 30 in einer Nut 25 geführt. Dadurch wird verhindert, daß beim drehschlagenden Einsatz der Bohrkrone das jeweilige Federelement 27 bis 30 losgeschlagen oder herausgelöst wird.

In Fig. 3 wird der Zentrierbohrer 6, wie zu Fig. 1 und 2 beschrieben, durch das stiftartige Haltemittel 12 in der Bohrung 5 des Bohrwerkzeugs 1 mit Längsspiel positioniert und gesichert. Zur Sicherung des stiftartigen Haltemittels 12 greift das Federelement 27 an einer Seite in die seitliche Öffnung 24' der Querbohrung 13, in welcher das Haltemittel 12 bewegbar angeordnet ist. Auf der gegenüberliegenden Seite überdeckt das Ende des Federelements 27 die andere Öffnung 24 der Querbohrung 13. Damit ist das Haltemittel 12 gegen Herausfallen eindeutig gesichert. Das in der Nut 25 geführte Federelement 27 ist selbstklemmend, da es einen größeren Bereich als den halbe Umfang des Bohrkronenschaftes 4 umschließt. Durch das in die Öffnung 24' eingebogene Ende ist es außerdem in seiner Position arretiert.

Fig. 4 zeigt ein weiteres Ausführungsbeispiel, wobei zur Sicherung des Haltemittels 12 beide Enden des Federelements 28 in die jeweiligen Öffnungen 24, 24' der Querbohrung 13 eingreifen.

Fig. 5 zeigt ein weiteres Ausführungsbeispiel, bei dem der Zentrierbohrer 6 durch ein abgewandeltes stiftartiges Haltemittel 12' im Schaft 4 positioniert und gehalten wird, wobei das Federelement 29 an einem Ende an das Haltemittel 12' angeformt ist. Auch bei dieser Lösung muß beim Wechseln des Zentrierbohrers 6 das stiftartige Haltemittel 12' mit angeformtem Federelement 29 lediglich von der Nut 25 abgezogen werden. Eine Selbstklemmung wird dadurch erreicht, daß das angeformte Federelement 29 sich über einen genügend großen Bereich des Umfangs des Schaftes 4 erstreckt.

Die Fig. 6 zeigt als weiteres Ausführungsbeispiel den Zentrierbohrer 6 im Schaft 4 des Bohrwerkzeugs, welcher durch ein zylindrisches Haltemittel 12 wiedrum positioniert und gesichert wird, wobei das stiftartige Haltemittel 12 einen mit einem Schlitz versehenen Kopf 31 besitzt. Durch den Schlitz 32 im Kopf 31 des Haltemittels 12 verläuft das in der Nut 25 geführte Federelement 30. Somit wird vom Federelement 30 nicht nur ein Herausfallen des stiftartigen Haltemittels 12 aus der Querbohrung 13 verhindert, sondern auch eine Drehung des Haltemittels um seine Längsachse. Dabei greift das Federelement 30 wiederum einseitig in die Ausnehmung 24' der Querbohrung ein, wodurch ein Verdrehen des Federelements 30 entlang der Nut 25 unterbunden wird.

In der eingezeichneten Position wird das Entfernen des Zentrierbohrers 6 durch das Haltemittel 12 blockiert. Wird das stiftartige Haltemittel 12 jedoch 180° um seine Längsachse gedreht, kann der Zentrierbohrer 6 aufgrund einer Aussparung 33 im stiftartigen Haltemittel 12 in einfacher Weise in axialer Richtung herausgezogen werden. Auch das Federelement 30 ist selbstklemmend, da es mehr als den halben Umfang des Bohrkronenschaftes 4 umschließt. Darüber hinaus sind das Federelement 30, das stiftartige Haltemittel 12 und somit der Zentrierbohrer 6 ebenso wie bei den vorangegangenen Ausführungsbeispielen ohne Werkzeug demontier- und auswechselbar.

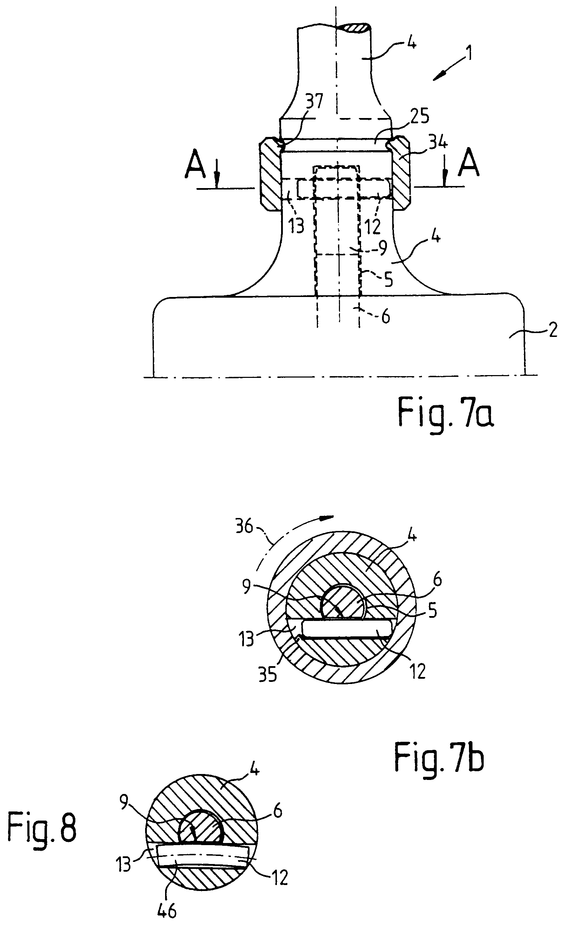

Im weiteren Ausführungsbeispiel nach Fig. 7a, b ist der Zentrierbohrer 6 in der Bohrung 5 im Schaftteil 4 einer Bohrkrone 2 angeordnet und wiederum mit Hilfe eines zylinderischen Haltemittels 12 in der Querbohrung 13 positioniert und gehalten. Das Haltemittel 12 wird auf einer Seite von einer elastischen Manschette 34 und auf der anderen Seite, am drehrichtungsseitigen Ende der Querbohrung 13 von einem Anschlag 35 positioniert und gesichert. Die Drehrichtung wird durch den strichpunktierten Pfeil 36 in Fig. 7b symbolisiert. Am Bohrkronenschaft 4 befindet sich wiederum eine umlaufende Nut 25, die die elastische Manschette 34 am Schaft in geeigneter Weise positioniert und sichert. Hierfür weist die elastische Manschette 34 eine entsprechend angepaßte, ebenfalls umlaufende Erhebung 37 auf, die mit der Nut 25 zusammenwirkt. Beim Einsetzen des Zentrierbohrers 6 in die Bohrung 5 wird - wie auch in den zuvor beschriebenen Ausführungsbeispielen - die ebene, seitliche Aussparung 9 am Zentrierbohrerschaft 7 derart verdreht, daß das stiftartige Haltemittel 12 entlang der ebenen Ausnehmung zum Liegen kommt und im vorliegenden Fall bis zum Anschlag 35 in die Ausnehmung 13 eingeführt werden kann. Nachfolgend ist es nur noch notwendig, die elastische Manschette 34 von oben über den Schaft 4 des Bohrwerkzeugs 1 zu stülpen, wobei sich die Erhebung 37 formschlüssig in die Nut 25 im Schaft 4 einfügt. Dabei fängt der Anschlag 35 alle auftretenden Kräfte ab, die das stiftartige Haltemittel 12 aus dem in Drehrichtung zeigenden Ende der Querbohrung 13 aufgrund der Fliehkraft herausdrängen möchten. Am gegenüberliegenden Ende der Querbohrung 13 ist es vollkommend ausreichend, das stiftartige Haltemittel 12 allein durch die elastische Manschette 34 zu fixieren. Auch mit dieser erfindungsgemäßen Befestigungsart ist es möglich völlig werkzeuglos den Zentrierbohrer 6 einzusetzen und gegen einen neuen auszutauschen.

Fig. 8 zeigt ein weiteres Ausführungsbeispiel mit einem Zentrierbohrer 6, der durch ein weiteres zylindrisches Haltemittel 12 positioniert und gesichert wird. Die Besonderheit in dieser Ausführungsform liegt darin, daß das Haltemittel in sich gekrümmt und damit in der Querbohrung 13 verspannt ist. Das Einsetzen dieses Haltemittels 12 erfordert zwar ein Werkzeug, wie beispielsweise einen Hammer oder einen Durchschlag. Dafür sind keine zusätzlichen Sicherungselemente für das Haltemittel 12 erforderlich. Das gekrümmte Haltemittel ist dabei in der Lage, die auftretenden Kräfte des Zentrierbohrers 6 aufzunehmen, der wiederum mit seiner ebenen Aussparung 9 gegen das stiftartige Haltemittel 12 anliegt, um eine axiale Sicherung sowie eine Drehmitnahme zu bewirken. Der übrige Aufbau und die Wirkungsweise entspricht den zuvor beschriebenen Ausführungsbeispielen.

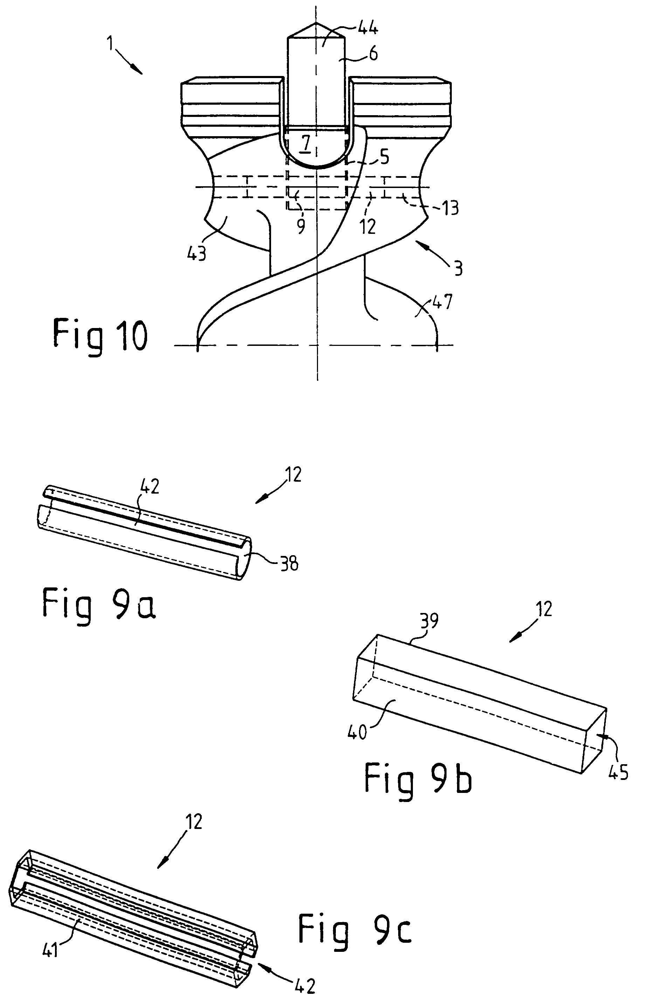

In den Figuren 9a bis 9c sind noch alternative Ausführungsformen für das stab- oder rohrförmige Haltemittel 12 dargestellt. Dieses Haltemittel ist in den Figuren 1a bis 7b im wesentlichen als stiftförmiges zylindrisches Haltemittel aus einem Vollmaterial gebildet. Dabei wird dieser Zylinderstift mit Spiel in die jeweilige Bohrung 13 eingesetzt und durch zusätzliche, am Schaft 4 außenliegende Maßnahmen am Herausfallen gesichert. Fig. 8 zeigt darüberhinaus ein leicht gebogenes zylinderförmiges Haltemittel 12, welches sich aufgrund seiner Längsachse 46 mit Krümmung in der Bohrung 13 verklemmt.

Bei dem in Fig. 9a dargestellten Haltemittel 12 handelt es sich um ein rohrförmiges Haltemittel 12 und insbesondere um einen gebräuchlichen Spannstift 38 nach DIN 1481 oder DIN 6365. Derartige Spannstifte sind äußerst kostengünstig und können aufgrund ihres Längsschlitzes 42 kraftschlüssig und/oder formschlüssig in die Querbohrung 13 eingesetzt werden. Der Längsschlitz 42 ermöglicht eine Verkleinerung des Außendurchmessers beim Einschlagen eines solchen Haltemittels, so daß sich eine kraftschlüssige Verspannung in der jeweiligen Querbohrung 13 ergibt. Es ist zweckmäßig den längsgeschlitzten Spannstift 12, 38 gemäß Fig. 9a derart in die Bohrung zu positionieren, daß der Längsschlitz 42 der ebenen Ausnehmung 9 des Zentrierbohrers 6 gegenüber liegt.

In Fig. 9b ist ein quaderförmiges Haltemittel 12 dargestellt, dessen stabförmiger Quader 39 im Längsschnitt einen quadratischen Querschnitt 45 aufweist. In diesem Fall kann die Querbohrung 13 ebenfalls einen hieran angepaßten quadratischen Querschnitt aufweisen. Vorteilhaft an einer solchen Ausführungsform ist die flächige Anlage einer Längsseite 40 des Quaders 39 an die ebene Aussparung 9 des Zentrierbohrers 6, gegenüber einer nur linienförmigen Berührung bei einem zylindrischen Haltemittel 12.

Schließlich zeigt die Fig. 9c ein rohrförmiges Haltemittel 12, welches als Polygonkörper 41 ausgebildet ist. Hier wird der Grundgedanke des in Fig. 9a dargestellten Spannstiftes 38 kombiniert mit der zu Fig. 9b beschriebenen flächenartigen Auflage an der ebenen Aussparung 9 des Schaftteils 7 des jeweiligen Zentrierbohrers 6. Selbstverständlich kann in diesem Fall die Querbohrung 13 ebenfalls zylindrisch ausgebildet sein, was grundsätzlich auch beim Ausführungsbeispiel nach Fig. 9b mit dem quaderförmigen Haltemittel möglich ist. Der Polygonkörper 41 mit polygonartigem und insbesondere sechseckigem Querschnitt ist wie Fig. 9a rohrförmig mit einem Längsschlitz 42 zwecks Verspannung ausgebildet.

Fig. 10 zeigt schließlich ein weiteres Ausführungsbeispiel der Erfindung mit einem als Durchbruchbohrer 3 ausgebildeten Bohrwerkzeug 1, mit auswechselbarem Zentrierbohrer 6. Grundsätzlich entspricht ein solches Werkzeug der eingangs erwähnten DE 28 56 205.

Das Ausführungsbeispiel nach Fig. 10 entspricht in seinem näheren Aufbau einem Bohrwerkzeug, wie es beispielsweise in der DE 42 36 553 der Anmelderin gezeigt ist. Auf diese Beschreibung des Bohrwerkzeugs wird hiermit ausdrücklich verwiesen. Dort ist es offengelassen, in welcher Form der Zentrierbohrer am Werkzeug angeordnet ist.

Zur Sicherung und Positionierung eines in einem solchen Werkzeug auswechselbar einsetzbaren Zentrierbohrers 6 weist der Bohrerkopf 43 wiederum eine geeignete Querbohrung 13 auf, die sich im Übergangsbereich zwischen Bohrerkopf 43 und Förderwendel 47 befindet und in die vorzugsweise ein selbstklemmendes Haltemittel 12 eingesetzt ist. Als selbstklemmendes Haltemittel können Ausführungsformen insbesondere gemäß Fig. 8, 9a und 9c verwendet werden.

Grundsätzlich wirkt das selbstklemmende Haltemittel 12 wiederum mit einer ebenen Ausnehmung 9 am Schaftteil 7 des Zentrierbohrers 6 zusammen, wobei die Ausnehmung 9 in gleicher Art und Weise wie zuvor beschrieben exzentrisch bzw. außermittig gegenüber der Bohrerlängsachse 44 angeordnet ist. Die Befestigung und Positionierung sowei Arretierung erfolgt in gleicher Weise wie zuvor beschrieben.

Die Erfindung ist nicht auf die dargestellten und beschriebenen Ausführungsbeispiele beschränkt. Sie umfaßt auch vielmehr alle fachmännischen Weiterbildungen im Rahmen der Schutzrechtsansprüche.

## Patentansprüche

1. Bohrwerkzeug (1), insbesondere für drehschlagendes Bohren von vorzugsweise Gestein, mit einem zur Bohrseite hin vorzugsweise mit Schneideinsätzen bestückten Bohrkörper (2, 3) und einer axial angeordneten Bohrung (5) zur Aufnahme eines Zentrierbohrers (6) mit Zentrierbohrerschaft (7), wobei im Bereich des Einspannendes des Zentrierbohrers (6) im Bohrwerkzeug (1) ein Haltemittel (12) zur Sicherung und Positionierung des Zentrierbohrer (6) vorhanden ist, dadurch gekennzeichnet, daß das Haltemittel (12) im Bohrwerkzeug (1, 2, 3) quer zur Bohrrichtung in einer Querbohrung oder Ausnehmung (13) im Schaftteil (4) bzw. im Bohrerkopf (43) des Bohrwerkzeugs (1, 2, 3) verläuft und in die Bohrung (5) zur Aufnahme des Zentrierbohrers (6) bezüglich der Bohrwerkzeugmittelachse (44) außermittig eindringt, wobei der Zentrierbohrerschaft (7) in diesem Bereich eine Aussparung (9) aufweist.

2. Bohrwerkzeug nach Anspruch 1, dadurch gekennzeichnet, daß dieses als Bohrkrone (2) mit einem Bohrkronenschaft (4), als Durchbruchbohrer (3) vorzugsweise mit einem Kreuzbohrkopf (43) oder dergleichen oder als sonstiger Bohrer mit Zentrierbohrer ausgebildet ist.

3. Bohrwerkzeug nach Anspruch 1 oder 2, dadurch gekennzeichnet, daß das Bohrwerkzeug (1) eine axiale Aufnahmebohrung (5) zur Aufnahme des Zentrierbohrers (6) mit einem Bohrungsboden (11) aufweist, der als Anschlag für das Zentrierbohrerende (10) des Zentrierbohrers (6) zu seiner schlagenden Beanspruchung dient.

4. Bohrwerkzeug nach Anspruch 1, 2 oder 3, dadurch gekennzeichnet, daß die außermittige, exzentrische Querbohrung oder Ausnehmung (13) im Schaftteil (4) bzw. im Bohrerkopf (43) des Bohrwerkzeugs (1, 2, 3) den Werkzeugschaft (4) oder den Bohrkopf (43) oder den Übergangsbereich zwischen Bohrerkopf (43) und Förderwendel (47) teilweise oder vollständig durchdringt.

5. Bohrwerkzeug nach einem der vorhergehenden Ansprüche, dadurch gekennzeichnet, daß ein stab- und/oder rohrförmige Haltemittel (12) in der Querbohrung oder Ausnehmung (13) im Schaftteil (4) bzw. im Bohrerkopf (43) des Bohrwerkzeugs (1, 2, 3) bewegbar oder verspannbar bzw. selbstklemmend angeordnet ist.

6. Bohrwerkzeug nach Anspruch 5, dadurch gekennzeichnet, daß am Schaft (4) einer Bohrkrone (2) oder am Übergang zwischen Bohrerkopf (43) und Förderwendel (47) eines Durchbruchbohrers (3) zur Positionierung und Sicherung des stabförmigen oder stiftartigen Haltemittel (12) ein Federelement (22, 27 bis 30) vorgesehen ist.

7. Bohrwerkzeug nach Anspruch 6, dadurch gekennzeichnet, daß zur Positionierung des Federelements (22, 27 bis 30) an der Außenseite des Schaftes (4) einer Bohrkrone (2) eine teilweise oder vollständig umlaufende Nut (25) vorgesehen ist.

8. Bohrwerkzeug nach Anspruch 5, dadurch gekennzeichnet, daß am Schaft (4) einer Bohrkrone (2) zur Positionierung und Sicherung eines stab- oder stiftartigen Haltemittels (12) ein ganz oder teilweise geschlossener Verriegelungsring (17) vorgesehen ist, wobei der Verriegelungsring (17) vorzugsweise eine Erhebung (18) aufweist, die in einer am Schaft (4) vorhandenen Nut (19) formschlüssig und/oder kraftschlüssig arretierbar ist.

9. Bohrwerkzeug nach Anspruch 6 oder 8, dadurch gekennzeichnet, daß das Federelement (22, 27 bis 30) oder der Verriegelungsring (17) werkzeuglos montierbar und demontierbar sind.

10. Bohrwerkzeug nach einem der vorgenannten Ansprüche, dadurch gekennzeichnet, daß das Haltemittel (12) einseitig einen Kopf (31) mit Anschlagfläche besitzt, wobei der Kopf (31) einen Schlitz (32) aufweist, in den das Federelement (30) eingreift.

11. Bohrwerkzeug nach einem der vorhergehenden Ansprüche 1 bis 5, dadurch gekennzeichnet, daß am Schaft (4) eines Bohrers und insbesondere einer Bohrkrone (2) zur Positionierung und Sicherung des Haltemittels (12) eine elastische Manschette (34) vorgesehen ist, die vorzugsweise zu ihrer Positionierung und Sicherung wenigstens eine Erhebung (37) aufweist, die in eine Nut (25) am Schaft (4) eingreift.

12. Bohrwerkzeug nach Anspruch 11, dadurch gekennzeichnet, daß die Nut (25) zur formschlüssigen Befestigung von Federelementen (22, 27 bis 30) bzw. von einer elastischen Manschette (34) in einer anderen Ebene verläuft, als die Querbohrung oder Ausnehmung (13) im Schaftteil (4) bzw. im Bohrerkopf (43) des Bohrwerkzeugs (1, 2, 3) zur Aufnahme des Haltemittels (12).

13. Bohrwerkzeug nach Anspruch 1, 5 oder 11, dadurch gekennzeichnet, daß die Querbohrung oder Ausnehmung (13) im Schaftteil (4) bzw. im Bohrerkopf (43) des Bohrwerkzeugs (1, 2, 3) zur Aufnahme des Haltemittels (12) zur Positionierung und Sicherung des Zentrierbohrers (6) an dem in Drehrichtung der Bohrkrone zeigenden Ende einen Anschlag (35) aufweist.

14. Bohrwerkzeug nach Anspruch 1 oder 5, dadurch gekennzeichnet, daß das Haltemittel (12) als bezüglich seiner Längsachse (46) gekrümmter zylinderförmiger Stift ausgebildet ist, der in der Querbohrung (13) verspannt eingesetzt ist.

15. Bohrwerkzeug nach Anspruch 1 oder 5, dadurch gekennzeichnet, daß das Haltemittel (12) als rohrförmiger und/oder längsgeschlitzter zylinderförmiger Stift ausgebildet ist, der in der Querbohrung (13) lose oder verspannbar einsetzbar ist.

16. Bohrwerkzeug nach Anspruch 1, 5 oder 15, dadurch gekennzeichnet, daß das Haltemittel (12) als Spannstift (38) nach DIN 1481 oder DIN 6325 vorzugsweise rohrförmig mit oder ohne Längsschlitz (42) ausgebildet ist.

17. Bohrwerkzeug nach Anspruch 14, 15 oder 16, dadurch gekennzeichnet, daß das Haltemittel (12) als Körper (41, 45) mit einem polygonen Querschnitt und insbesondere als ein Haltemittel mit oder ohne Längsschlitz (42) ausgebildet ist.

18. Bohrwerkzeug nach Anspruch 1, dadurch gekennzeichnet, daß die Aussparung (9) am Zentrierbohrerschaft (7) eine axiale Länge von h₂ aufweist, die größer ist als die axiale Hublänge der schlagenden Bewegung des Zentrierbohrers (6).

19. Bohrwerkzeug nach Anspruch 1 oder 18, dadurch gekennzeichnet, daß die Aussparung (9) am Schaftende des Zentrierbohrers vom Zylinderabschnitt (16) begrenzt ist.

20. Bohrwerkzeug nach einem der vorhergehenden Ansprüche 1 bis 19, dadurch gekennzeichnet, daß das Haltemittel (12) gleichzeitig zur Drehmitnahme und zur axialen Sicherung bzw. Verriegelung des axial frei beweglichen Zentrierbohrers (6) dient.

## Claims

1. Drilling tool (1), in particular for the rotary-percussive drilling of preferably rock, with a drill body (2, 3) fitted towards the drilling side preferably with cutting inserts and an axially arranged bore (5) for mounting a centring drill (6) with a centring drill shaft (7), in which in the region of the clamping end of the centring drill (6) in the drilling tool (1) a holding means (12) is provided for securing and positioning the centring drill (6), characterised in that the holding means (12) in the drilling tool (1, 2, 3) runs perpendicular to the drilling direction in a transverse bore or recess (13) in the shaft part (4) or in the drill head (43) of the drilling tool (1, 2, 3) and penetrates into the bore (5) for mounting the centring drill (6) off-centre relative to the drilling tool middle axis (44), whereby the centring drill shaft (7) has a cut out (9) in this region.

2. Drilling tool according to claim 1, characterised in that the latter is designed as a drill bit (2) with a drill bit shaft (4), as a breakthrough drill (3) preferably with a cross drill head (43) or the like or as a different drill with a centring drill.

3. Drilling tool according to claim 1 or 2, characterised in that the drilling tool (1) has an axial mounting bore (5) for mounting the centring drill (6) with a bore base (11), which acts as a stop for the centring drill end (10) of the centring drill (6) for its percussive loading.

4. Drilling tool according to claim 1, 2 or 3, characterised in that the off-centre, eccentric transverse bore or recess (13) in the shaft part (4) or in the drill head (43) of the drilling tool (1, 2, 3) partially or completely penetrates the tool shaft (4) or the drill head (43) or the transition region between the drill head (43) and conveyor spiral (47).

5. Drilling tool according to one of the preceding claims, characterised in that a rod and/or tube-shaped holding means (12) is arranged movably or able to be clamped or self-clamping in the transverse bore or recess (13) in the shaft part (4) or in the drill head (43) of the drilling tool (1, 2, 3).

6. Drilling tool according to claim 5, characterised in that on the shaft (4) of a drill bit (2) or at the transition between the drill head (43) and the conveyor spiral (47) of a breakthrough drill (3) for positioning and securing the rod-shaped or pin-shaped holding means (12) a spring element (22, 27 to 30) is provided.

7. Drilling tool according to claim 6, characterised in that for positioning the spring element (22, 27 to 30) on the outside of the shaft (4) of a drill bit (2) a partly or completely circumferential groove (25) is provided.

8. Drilling tool according to claim 5, characterised in that on the shaft (4) of a drill bit (2) for positioning and securing a rod or pin-shaped holding means (12) a completely or partly closed locking ring (17) is provided, wherein the locking ring (17) preferably has an elevation (18), which can be locked form-closed and/or force-closed in a groove (19) on the shaft (4).

9. Drilling tool according to claim 6 or 8, characterised in that the spring element (22, 27 to 30) or the locking ring (17) can be mounted and demounted without the use of tools.

10. Drilling tool according to one of the above claims, characterised in that the holding means (12) on one side has a head (31) with a stop surface, whereby the head (31) comprises a slot (32) in which the spring element (30) engages.

11. Drilling tool according to one of the preceding claims 1 to 5, characterised in that on the shaft (4) of a drill and in particular a drill bit (2) for positioning and securing the holding means (12) an elastic collar (34) is provided, which for its positioning and securing preferably has at least one elevation (37), which engages in a groove (25) on the shaft (4).

12. Drilling tool according to claim 11, characterised in that the groove (25) for the form-closed securing of spring elements (22, 27 to 30) or of an elastic collar (34) runs in a different plane to the transverse bore or recess (13) in the shaft part (4) or in the drill head (43) of the drilling tool (1, 2, 3) for mounting the holding means (12).

13. Drilling tool according to claim 1, 5 or 11, characterised in that the transverse bore or recess (13) in the shaft part (4) or in the drill head (43) of the drilling tool (1, 2, 3) for mounting the holding means (12) for positioning and securing the centring drill (6) at the end pointing in the direction of rotation of the drill bit has a stop (35).

14. Drilling tool according to claim 1 or 5, characterised in that the holding means (12) is designed as a cylindrical pin curved along its longitudinal axis (46) which is inserted clamped in the transverse bore (13).

15. Drilling tool according to claim 1 or 5, characterised in that the holding means (12) is designed as a tubular and/or longitudinally slotted cylindrical pin which can be inserted in the transverse bore (13) freely or so as to be locked.

16. Drilling tool according to claim 1, 5 to 15, characterised in that the holding means (12) is designed as a locking pin (38) according to DIN 1481 or DIN 6325 preferably tubular with or without longitudinal slot (42).

17. Drilling tool according to claim 14, 15 or 16, characterised in that the holding means (12) is designed as a body (41, 45) with a polygonal cross section and in particular as a holding means with or without a longitudinal slot (42).

18. Drilling tool according to claim 1, characterised in that the cut out (9) on the centring drill shaft (7) has an axial length h₂, which is greater than the axial lift of the percussive movement of the centring drill (6).

19. Drilling tool according to claim 1 or 18, characterised in that the cut out (9) on the shaft end of the centring drill is delimited by the cylinder section (16).

20. Drilling tool according to one of the preceding claims 1 to 19, characterised in that the holding means (12) is used simultaneously for the rotary drive and for the axial securing or locking of the axially freely movable centring drill (6).

## Revendications

1. Outil de forage (1), en particulier pour le forage par percussion de roche avantageusement, comportant un corps de forage (2,3) équipé, vers le côté de forage, avantageusement de pièces de coupe et un perçage (5) prévu de façon axiale pour recevoir un foret à centrer (6) ayant un arbre (7), un moyen de maintien (12) pour protéger et positionner le foret à centrer (6) étant prévu dans la zone de l'extrémité de serrage du foret à centrer (6) dans l'outil de forage (1),
caractérisé en ce que le moyen de maintien (12) s'étend dans l'outil de forage (1,2,3) transversalement à la direction de forage dans un perçage transversal ou évidement (13) dans la partie d'arbre (4) ou dans la tête de [oret (43) de l'outil de forage (1,2,3) et pénètre dans le perçage (5) pour recevoir le foret à centrer (6) de façon décentrée relativement à l'axe médian (44) de l'outil de forage, l'arbre (7) du foret à centrer présentant, dans cette zone, un évidement (9).

2. Outil de forage selon la revendication 1,
caractérisé en ce que celui-ci est réalisé comme couronne de forage (2) ayant un arbre (4), comme foret de perçage (3) avantageusement avec une tête de forage croisée (43) ou analogue ou comme foret quelconque ayant un foret à centrer.

3. Outil de forage selon la revendication 1 ou 2,
caractérisé en ce que l'outil de forage (1) présente un perçage de réception axial (5) pour recevoir le foret à centrer (6) avec un fond de perçage (11), qui sert comme butée pour l'extrémité (10) du [oret à centrer (6) vis-à-vis de sa sollicitation en percussion.

4. Outil de forage selon la revendication 1, 2 ou 3,
caractérisé en ce que le perçage transversal ou évidement (13) décentré, excentrique, dans la partie d'arbre (4) ou dans la tête de foret (43) de l'outil de forage (1,2,3) traverse partiellement ou en totalité l'arbre (4) de l'outil ou la tête de forage (43) ou la zone de transition entre la tête de foret (43) et l'hélice de transport (47).

5. Outil de forage selon une des revendications précédentes,
caractérisé en ce qu'un moyen de maintien (12) en forme de barre et/ou de tube est agencé dans le perçage transversal ou évidement (13) dans la partie d'arbre (4) ou dans la tête de foret (43) de l'outil de forage (1,2,3) de façon à pouvoir être déplacé ou à être serré, ou à auto-serrage.

6. Outil de forage selon la revendication 5,
caractérisé en ce qu'un élément élastique (22, 27 à 30) est prévu sur l'arbre (4) d'une couronne de forage (2) ou à la transition entre la tête de foret (43) et l'hélice de transport (47) d'un foret de perçage (3) pour positionner et protéger le moyen de maintien (12) en forme de barre ou du type tige.

7. Outil de forage selon la revendication 6,
caractérisé en ce qu'une gorge (25) partiellement ou totalement périphérique est prévue pour positionner l'élément élastique (22, 27 à 30) sur la face externe de l'arbre (4) d'une couronne de forage (2).

8. Outil de forage selon la revendication 5,
caractérisé en ce qu'une bague de verrouillage totalement ou partiellement fermée (17) est prévue sur l'arbre (4) d'une couronne de forage (2) pour positionner et protéger un moyen de maintien du type barre ou tige (12), la bague de verrouillage (17) présentant avantageusement une saillie (18) qui peut être bloquée sous l'influence d'une force et/ou par coopération de formes dans une gorge (19) présente sur l'arbre (4).

9. Outil de forage selon la revendication 6 ou 8,
caractérisé en ce que l'élément élastique (22, 27 à 30) ou la bague de verrouillage (17) peut être monté et démonté sans outil.

10. Outil de forage selon une des revendications précitées,
caractérisé en ce que le moyen de maintien (12) possède, d'un côté, une tête (31) ayant une surface de butée, la tête (31) présentant une fente (32) dans laquelle s'engage l'élément élastique (30).

11. Outil de forage selon une des revendications précédentes 1 à 5,
caractérisé en ce qu'un manchon élastique (34) est prévu sur l'arbre (4) d'un foret et, en particulier, d'une couronne de forage (2) pour positionner et protéger le moyen de maintien (12), manchon qui présente avantageusement pour le positionner et le protéger au moins une saillie (37), qui s'engage dans une gorge (25) sur l'arbre (4).

12. Outil de forage selon la revendication 11,
caractérisé en ce que la gorge (25) pour la fixation par coopération de formes d'éléments élastiques (22, 27 à 30) ou d'un manchon élastique (34) s'étend dans un autre plan que le perçage transversal ou évidement (13) dans la partie d'arbre (4) ou dans la tête de foret (43) de l'outil de forage (1,2,3) pour recevoir le moyen de maintien (12).

13. Outil de forage selon la revendication 1, 5 ou 11,
caractérisé en ce que le perçage transversal ou évidemment (13) dans la partie d'arbre (4) ou dans la tête de foret (43) de l'outil de forage (1,2,3) pour recevoir le moyen de maintien (12), pour positionner et protéger le [oret à centrer (6), présente une butée (35) à l'extrémité pointant dans le sens de rotation de la couronne de forage.

14. Outil de forage selon la revendication 1 ou 5,
caractérisé en ce que le moyen de maintien (12) est réalisé comme broche cylindrique cintrée relativement à son axe longitudinal (46), laquelle est montée de façon serrée dans le perçage transversal (13).

15. Outil de forage selon la revendication 1 ou 5,
caractérisé en ce que le moyen de maintien (12) est réalisé comme broche cylindrique tubulaire et/ou longitudinalement fendue qui peut être montée de façon lâche ou en pouvant être serrée dans le perçage transversal (13).

16. Outil de forage selon la revendication 1, 5 ou 15,
caractérisé en ce que le moyen de maintien (12) est réalisé comme broche de serrage (38) selon DIN 1481 ou DIN 6325 avantageusement de façon tubulaire avec ou sans fente longitudinale (42).

17. Outil de forage selon la revendication 14, 15 ou 16,
caractérisé en ce que le moyen de maintien (12) est réalisé comme corps (41,45) ayant une section transversale polygonale et, en particulier, comme un moyen de maintien avec ou sans fente longitudinale (42).

18. Outil de forage selon la revendication 1,
caractérisé en ce que l'évidement (9) sur l'arbre (7) du foret à centrer présente une longueur axiale de h₂, qui est plus grande que la longueur de course axiale du mouvement de percussion du foret à centrer (6).

19. Outil de forage selon la revendication 1 ou 18,
caractérisé en ce que l'évidement (9) est limité à l'extrémité de l'arbre du foret à centrer par le troncon cylindrique (16).

20. Outil de forage selon une des revendications précédentes 1 à 19,
caractérisé en ce que le moyen de maintien (12) sert simultanément à entraîner en rotation et à protéger ou verrouiller axialement le foret à centrer (6) axialement librement mobile.
